(19) Europäisches Patentamt

European Patent Office

Office européen des brevets

(11) Numéro de publication: **0 407 303 A1**

## (12) DEMANDE DE BREVET EUROPEEN

(21) Numéro de dépôt: **90401950.2**

(22) Date de dépôt: **05.07.90**

(51) Int. Cl.⁵: **B60G 7/02,** B60G 21/055, F16F 1/38

(30) Priorité: **07.07.89 FR 8909165**

(43) Date de publication de la demande: **09.01.91 Bulletin 91/02**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Veneau, Jean**
**21, Domaine de la Côte Noire**
**F-92500 Rueil Malmaison(FR)**
Inventeur: **Milosevic, Zoran**
**18, bis rue de Verdun**
**F-78110 Le Vesinet(FR)**

(54) **Train arrière de véhicule automobile.**

㉗ Train arrière de véhicule automobile comportant des bras tirés (1), (2) indépendants l'un de l'autre ou liés entre eux par une traverse (3) montés articulés sur la structure du véhicule (21) par des articulations à biellettes (9), (10) formées par les bras de roue (1), (2) et destiné à compenser des accélérations transversales en virage.

Application aux suspensions de véhicules automobiles.

FIG.4

## TRAIN ARRIERE DE VEHICULE AUTOMOBILE

L'invention concerne un train arrière de véhicule automobile, notamment destiné à corriger l'effet survireur lors du braquage de l'essieu qui intervient dans certaines conditions de roulement.

Lorsqu'un véhicule est soumis à une accélération transversale, en particulier dans un virage, les forces transmises sur l'ensemble du train arrière peuvent être très importantes. La déformation de la structure du train arrière ou le déplacement de l'ensemble de ladite structure au niveau de ses liaisons avec le chassis, provoque un "basculement" de la position de l'axe des roues arrières dans le sens de la réduction du rayon de virage, ce qui induit spontanément un effet de survirage. Ceci est dû pour l'essentiel à la présence des articulations élastiques qui solidarisent le train arrière au chassis, et qui sont destinées à filtrer un certain niveau de vibrations en provenance des roues ; ces articulations élastiques se déformant sous l'action des efforts transversaux proportionnellement à leur raideur propre. L'essieu arrière bascule alors autour de son centre instantané de rotation.

On comprend mieux l'effet produit par les forces latérales sur le train arrière à l'aide des figures annexées.

Sur la figure 1 qui est le montage type d'un train arrière à bras tirés avec un un essieu en profilé, le déplacement de l'essieu se fait dans le sens du virage.

Sur la figure 2, qui fait l'objet de l'invention, le déplacement de l'essieu se fait dans le sens opposé au virage, c'est-à-dire provoque un sous-virage du véhicule sous les mêmes efforts extérieurs.

Le brevet allemand DE 31 33 312 déposé le 22 Août 1981 par la Société VOLKSWAGEN décrit un train arrière relié à la caisse du véhicule par un jeu de biellettes, ce qui produit l'effet de sous-virage dans le cas d'une force latérale comme celle produite en virage.

L'invention ici décrite propose un jeu d'articulations intégrées à la structure du train arrière qui assure un meilleur guidage de l'ensemble pendant son déplacement, tout en assurant un bon filtrage des vibrations émises par les roues vers la caisse du véhicule. L'originalité de l'articulation selon l'invention est la grande qualité de guidage de ladite articulation et l'obtention de l'effet sous-vireur recherché.

Les figures annexées illustrent l'invention :

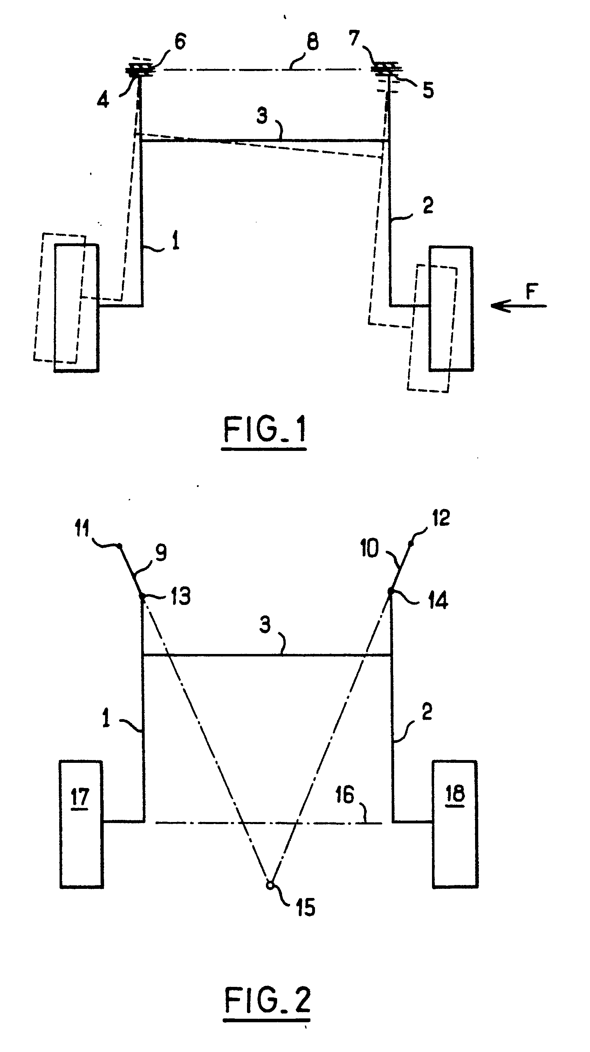

- La figure 1 représente un train arrière selon une forme de réalisation courante : les bras tirés, reliés entre eux par un essieu en profilé, sont montés pivotants sur la structure du véhicule grâce à des articulations élastiques.

- La figure 2 représente la cinématique du train arrière sans sollicitation latérale.

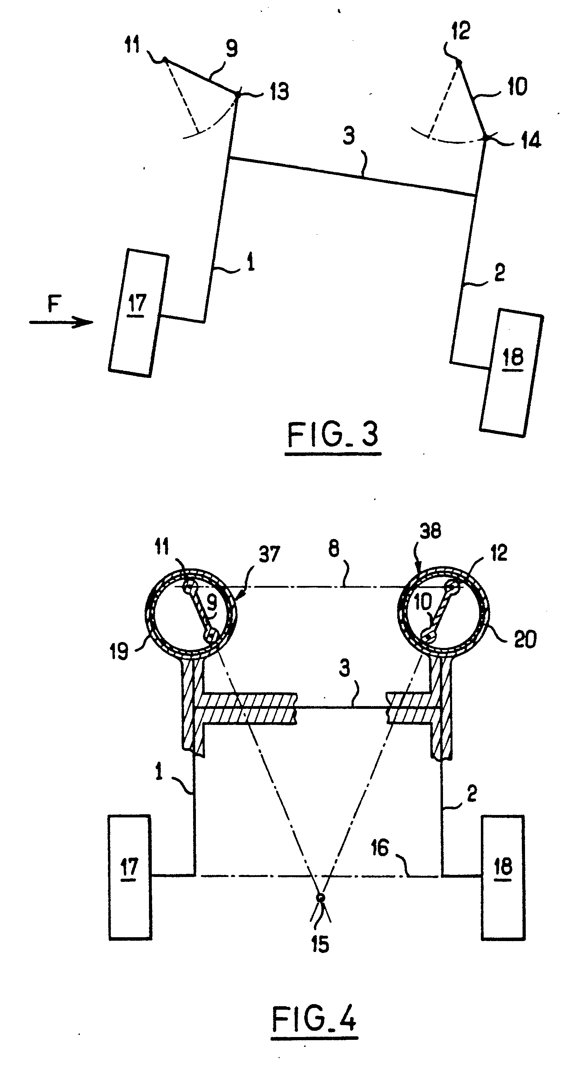

- La figure 3 représente la cinématique du même train arrière avec une sollicitation latérale comme en virage.

- La figure 4 représente le train arrière équipé des articulations qui font l'objet de l'invention.

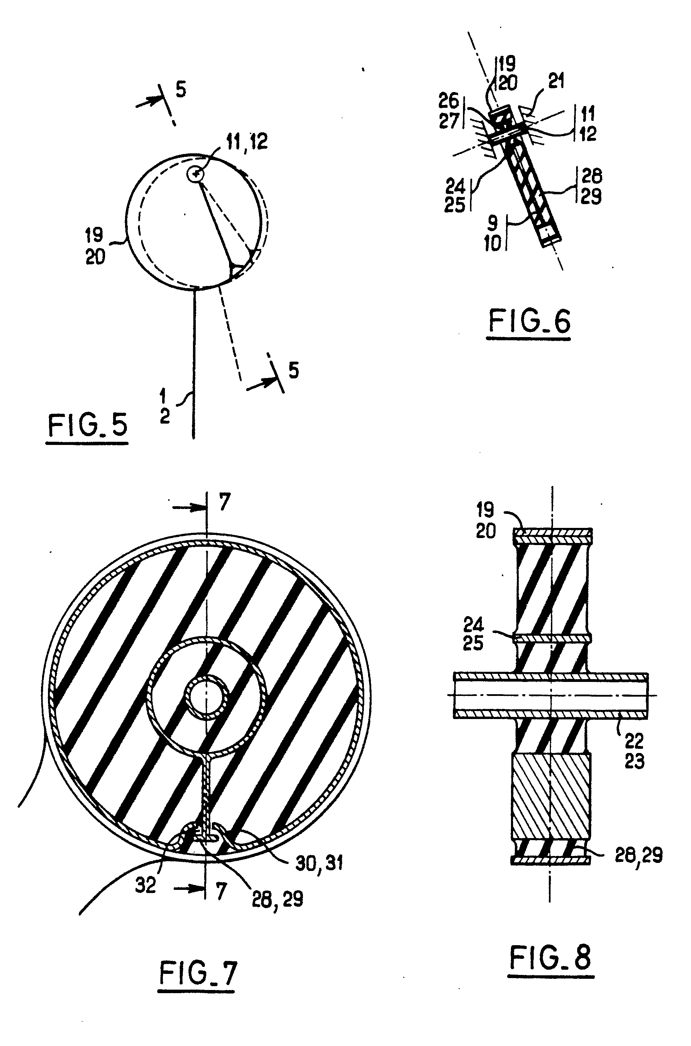

- La figure 5 est une représentation schématique de l'articulation selon l'invention.

- La figure 6 est une vue en coupe de la figure 5.

- La figure 7 est une vue en plan d'une forme de réalisation de l'articulation selon l'invention.

- La figure 8 est une vue en coupe de la figure 7.

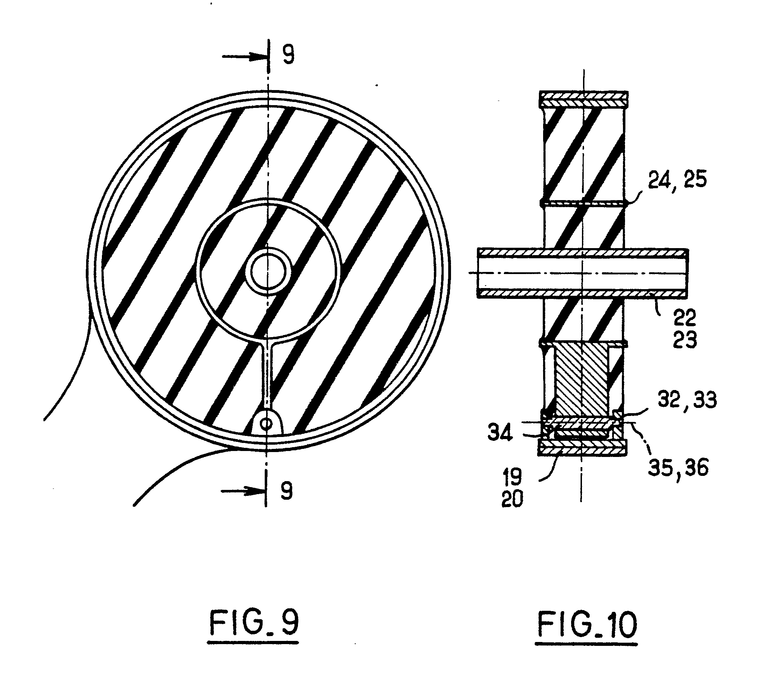

- La figure 9 est une vue en plan d'une autre forme de réalisation selon l'invention.

- La figure 10 est une vue en coupe de la figure 9.

Un train arrière tel que représenté sur la figure 1 est typique d'un grand nombre de réalisations actuelles. Il est constitué de deux bras tirés 1, 2, reliés entre eux par un profilé 3 qui peut être souple en torsion. Chaque bras 1.2, est muni à son extrémité avant d'une bague 4.5, portant un palier élastique 6.7, de rotation autour d'un axe 8. Dans les virages, une force latérale F tend à décaler l'ensemble de l'architecture d'un tel train par la déformation des paliers élastiques 6.7. On voit sur la figure 1 que le centre de rotation diminue, ce qui rend la voiture survireuse.

La figure 2 représente la cinématique d'un train arrière à bras tirés qui sont reliés à la structure du véhicule par 2 biellettes 9.10, articulées d'une part sur le chassis en 11, 12, et d'autre part à l'extrémité avant 13, 14 de chaque bras tiré 1,2. Dans cette configuration le train ne subit pas, ou très peu de sollicitations latérales. On remarque que l'agencement des biellettes 9, 10, avec les bras 1, 2, est tel que les droites virtuelles prolongeant lesdites biellettes se coupent en 15 (qui est le centre de rotation de l'essieu arrière) et en arrière d'une droite 16 passant par l'axe des roues arrières 17, 18.

Sur la figure 3, lorsqu'un effort latéral important est appliqué au train arrière, et c'est le cas notamment en virage, les biellettes 9, 10, pivotent autour de leur point d'articulation 11, 12, sur la structure du véhicule. L'ensemble des bras arrières accrochés à l'extrémité des biellettes 9, 10, en 13, 14 pivote. Le centre de rotation s'éloigne de l'axe de la voiture et celle-ci devient sous-vireuse.

- La figure 4 est l'illustration d'un train arrière à bras tirés équipé des articulations faisant l'objet de l'invention. Chaque bras 1, 2, est conformé à sa partie avant par un boîtier annulaire 19, 20. Des biellettes 9, 10, relient le cadre ainsi formé à la structure du véhicule ; elles sont articulées sur ladite structure en 11, 12, et elles sont reliées en 13, 14 sur les boîtiers annulaires 19, 20, qui forment l'extrémité de bras 1, 2. Selon une forme de réalisation préférentielle, la longueur et l'inclinaison de chaque biellette 9, 10, sont agencées de sorte que les droites virtuelles prolongeant lesdites biellettes so coupent en un point 15 (qui est le centre de rotation de l'essieu arrière) et qui est situé en arrière d'une droite 16 passant par l'axe des roues arrières 17, 18.

On comprend bien la cinématique de l'articulation revendiquée sur les figures 5 et 6. Les bras 1, 2 sont liés à la structure par les biellettes 9, 10 qui oscillent autour des axes 11, 12, implantés rigidement dans une position sensiblement verticale sur la structure 21. Chaque biellette se termine à sa partie Avant par une forme annulaire 24, 25 relié à une entretoise 22, 23 par une anneau de matériau élastique comme du caoutchouc 26, 27 maintenu adhérisé d'une part sur la forme annulaire et d'autre part sur l'entretoise. Ce montage élastique autorise l'oscillation de la bielle 9, 10, autour de l'axe 11, 12 rigide sur le chassis 21, et filtre les vibrations de roulement du train arrière. Chaque biellette 9, 10, est maintenue solidaire dans le boîtier annulaire 19, 20, par un élément élastique 28, 29, en caoutchouc ou similaire, maintenu adhérisé d'une part sur la biellette 9, 10, et d'autre part à l'intérieur du boîtier annulaire 19, 20. La rigidité du matériau composant l'élément élastique 28, 29, conditionne la rotation du train arrière sans effort latéral : Sa nature, sa forme, sa conception seront donc définis en fonction du résultat recherché.

Les figures 7 et 8 représentent une forme de réalisation de la liaison de chaque biellette 9, 10 avec le boîtier annulaire 19, 20 qui lui est associé. La partie arrière de la biellette possède un talon 28, 29, qui est retenu par deux lèvres 30, 31 formées par le boîtier 19, 20. Un espace 32 aménagé entre le talon 28 ou 29 et les lèvres 30 ou 31, est garni par l'élément élastique 28, 29.

Les figures 9 et 10 représentent une autre forme de réalisation de cette liaison biellette-boîtier. Cette solution annule toute élasticité entre la biellette et le boîtier. La partie arrière de la biellette 9, 10, possède une cage 32, 33 dans laquelle est monté un palier rigide 34. L'axe de la cage 32, 33 est parallèle à l'axe de la forme annulaire 24, 25 formée à l'extrémité avant ladite biellette. Ce palier rigide 34 tourillonne autour d'un axe 35, 36 monté solidaire du boîtier d'articulation 19, 20 du bras de suspension 1,2.

**Revendications**

1°) Train arrière de véhicule automobile comportant des bras de suspension (1), (2) longitudinaux tirés, indépendants l'un de l'autre ou liés entre eux par une traverse en profilé (3) qui peut être un essieu souple, articulés à leur partie avant sur la structure (21) du véhicule et portant à leur partie arrière les roues (17), (18) caractérisé en ce que chacun des bras longitudinaux est formé de deux éléments articulés (37), (38) et peuvent osciller au moins autour d'un axe de pivotement vertical (11), (12) appartenant au chassis (21).

2°) Train arrière selon la revendication 1 caractérisé en ce que les éléments articulés comprennent 1 bras longitudinal (1), (2) et une biellette (9), (10), qui sont articulés entre eux (13), (14) et que ladite biellette (9), (10) est placée entre la structure (21) du véhicule et le bras longitudinal (1), (2).

3°) Train arrière selon les revendications précédentes caractérisé en ce que la longueur et l'inclinaison des biellettes (9), (10) peuvent être optimisés de façon à ce que l'axe (16) passant par les roues soit en avant du centre de rotation (15) défini par le point de rencontre des droites qui prolongent lesdites biellettes (9), (10).

4°) Train arrière selon les revendications précédentes caractérisé en ce que la partie avant du bras de roue (1), (2) a une forme de boîtier annulaire (19), (20) à axe vertical qui porte un premier élément (28), (29) en caoutchouc ou similaire maintenu adhérisé sur sur la face interne dudit boîtier annulaire à l'intérieur duquel la biellette (9), (10) est maintenue solidaire à l'élément (28), (29) par adhérisation, que ladite biellette (9), (10) porte à sa partie avant une forme annulaire (24), (25) dans l'axe de laquelle est positionnée uen entretoise rigide (22), (23) servant de fixation sur la structure du véhicule (21), qu'un deuxième élément (26), (27) de caoutchouc ou similaire est maintenu adhérisé d'une part sur la face intérieure du boîtier annulaire (24), (25) de la biellette (9), (10) et d'autre part sur la face extérieure de ladite entretoise (22), (23).

5°) Train arrière selon les revendications précédentes caractérisé en ce que l'articulation (13), (14) entre le bras (1), (2) et la biellette (9), (10) est agencée de façon telle que le boîtier annulaire (19), (20) de la partie avant du porte-roue (1), (2) possède des lèvres (30), (31) formant des butées de débattement angulaire sur le corps de la biellette (9), (10) et que lesdites lèvres (30), (31) forment une butée de déplacement longitudinal sur une tête (28), (29) aménagée à l'extrémité de ladite biellette.

## FIG. 1

## FIG. 2

4

FIG. 3

FIG. 4

FIG.5

FIG.6

FIG.7

FIG.8

FIG. 9

FIG. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2564785 (RENAULT)<br>* page 6, ligne 18 - page 7, ligne 21; figures 2, 3, 7, 8 * | 1-3 | B60G7/02<br>B60G21/055<br>F16F1/38 |
| Y | PATENT ABSTRACTS OF JAPAN<br>vol. 8, no. 182 (M-319)(1619) 22 août 1984,<br>& JP-A-59 75811 (FUJI JUKOGYO) 28 avril 1984,<br>* le document en entier * | 1-3 | |
| A | FR-A-2520072 (RENAULT)<br>* page 5, lignes 8 - 31; figures 2, 3 * | 2, 4, 5 | |
| A, D | DE-A-3133312 (VOLKSWAGEN)<br>* page 9, lignes 10 - 28; figures 1-5 * | 1-3 | |
| A | DE-A-3521361 (VOLKSWAGEN)<br>* figures 1-4 * | 1 | |
| A | DE-U-1906805 (EMW)<br>* page 4, lignes 22 - 26; figure 2 * | 4 | |
| A | FR-A-2407399 (RENAULT) | | **DOMAINES TECHNIQUES RECHERCHES (Int. Cl.5 )** |
| A | FR-A-2366947 (PORSCHE) | | B60G<br>F16F |

Le présent rapport a été établi pour toutes les revendications

| Lieu de la recherche | Date d'achèvement de la recherche | Examinateur |
|---|---|---|
| LA HAYE | 15 OCTOBRE 1990 | TORSIUS A. |